# EUROPÄISCHE PATENTSCHRIFT

(11) **EP 3 430 553 B1**
(45) Veröffentlichungstag und Bekanntmachung des Hinweises auf die Patenterteilung: **13.10.2021**
(21) Anmeldenummer: 17710199.5
(22) Anmeldetag: 09.03.2017
(51) Int. Cl.: G06F 21/31

(54) **VERFAHREN ZUM AUTHENTIFIZIEREN EINES BENUTZERS EINER DATENVERARBEITUNGSVORRICHTUNG**
METHOD FOR AUTHENTICATING A USER OF A DATA-PROCESSING DEVICE
PROCÉDÉ D'AUTHENTIFICATION D'UN UTILISATEUR D'UN DISPOSITIF DE TRAITEMENT DE DONNÉES

(30) Priorität: 14.03.2016 DE 102016104589
(43) Veröffentlichungstag der Anmeldung: 23.01.2019
(73) Patentinhaber: Bundesdruckerei GmbH, 10969 Berlin (DE)
(72) Erfinder: WILKE, Andreas, 13509 Berlin (DE); MUSICK, Robert, 12167 Berlin (DE)
(74) Vertreter: Patentship Patentanwaltsgesellschaft mbH
(86) Internationale Anmeldenummer: PCT/EP2017/055509
(87) Internationale Veröffentlichungsnummer: WO 2017/157748

(56) Entgegenhaltungen:
- EP-A1- 2 645 285
- EP-A2- 2 928 152
- US-A1- 2003 132 974
- US-A1- 2015 373 007

## Beschreibung

Die vorliegende Erfindung betrifft das Gebiet des Authentifizierens eines Benutzers einer Datenverarbeitungsvorrichtung.

Die Offenlegungsschrift US 2015/373007 A1 offenbart einen Computer umfassend biometrische Sensoren, die unter anderem Eigenschaften eines Tippens eines Nutzers erfassen können.

Die Offenlegungsschrift EP 2 645 285 A1 offenbart, wie eine Griffwahl eines Nutzers, sein Mobiltelefon zu greifen, zur Authentifizierung des Nutzers verwendet werden kann.

Die Offenlegungsschrift US 2003/1329741 offenbart ein System zum Erfassen von Nutzergesten.

Zur Authentifizierung eines Benutzers einer Datenverarbeitungsvorrichtung, wie eines Computers, gibt der Benutzer häufig über eine Benutzerschnittstelle der Datenverarbeitungsvorrichtung eine Kennung ein. Beispielsweise ist die Benutzerschnittstelle eine Tastatur und ist die Kennung ein Passwort, eine Persönliche Identifikationsnummer (PIN), ein Benutzername oder eine Kombination aus Benutzername und Passwort. Eine von dem Benutzer über die Benutzerschnittstelle eingegebene Kennung kann jedoch vergleichsweise einfach, beispielsweise mittels eines Keyloggers, aufgezeichnet werden, wodurch eine Sicherheit der Authentifizierung reduziert sein kann. Hierdurch kann eine Eignung eines derartigen Authentifizierungsverfahrens als Authentifizierungsverfahren für Computer, sensible Maschinen, ein Zugangskontrollsystem, beispielsweise zu sensiblen Unternehmensbereichen, oder für Anwendungen im Business-to-Consumer-Bereich reduziert sein.

Zur Erhöhung der Sicherheit der Authentifizierung wird häufig eine sogenannte Zwei-Faktor-Authentifizierung durchgeführt. Hierbei wird die Eingabe der Kennung häufig mit einer Eingabe eines Einmalpasswortes, einer Transaktionsnummer (TAN), einer Mobilfunknummer oder einer E-Mail-Adresse oder mit einer zusätzlichen Authentifizierung mittels eines Sicherheits-Tokens gekoppelt. Hierbei kann das Sicherheits-Token ein Hardware-Token, wie eine Smartcard, sein. Ferner kann zu der Authentifizierung mittels des Sicherheitstokens eine Eingabe einer PIN, einer TAN oder eines Einmalpasswortes erforderlich sein. Die Durchführung einer Zwei-Faktor-Authentifizierung wird von dem Benutzer jedoch häufig als unkomfortabel empfunden.

Es ist daher die Aufgabe der vorliegenden Erfindung, ein effizientes Konzept zur Authentifizierung eines Benutzers einer Datenverarbeitungsvorrichtung zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt betrifft die Erfindung ein Verfahren zum Authentifizieren eines Benutzers einer Datenverarbeitungsvorrichtung, wobei die Datenverarbeitungsvorrichtung eine Benutzerschnittstelle zum Eingeben einer Benutzerangabe durch den Benutzer aufweist, mit: Erfassen einer Mehrzahl von Charakteristiken zumindest einer Benutzereingabe des Benutzers mittels der Datenverarbeitungsvorrichtung; Erstellen eines Eingabeprofils des Benutzers auf der Basis der erfassten Mehrzahl der Charakteristiken mittels eines Prozessors der Datenverarbeitungsvorrichtung; und Vergleichen des erstellten Eingabeprofils des Benutzers mit einem Referenzprofil, um den Benutzer zu authentifizieren. Dadurch wird der Vorteil erreicht, dass der Benutzer ohne eine zusätzliche Interaktion mit der Datenverarbeitungsvorrichtung, wie einer Passworteingabe, authentifiziert werden kann.

Das Authentifizieren des Benutzers kann eine Bestimmung der Identität des Benutzers umfassen. Ferner kann durch das Authentifizieren des Benutzers eine digitale Identität des Benutzers bestimmt werden.

Die Datenverarbeitungsvorrichtung kann ein Computer, ein Mobiltelefon, wie ein Smartphone, ein Tablet-Computer, ein Bankautomat, wie ein Geldautomat, ein Verkaufsautomat, ein Element eines Zugangskontrollsystems und/oder ein Bordcomputer, wie ein Bordcomputer eines Kraftfahrzeuges, sein. Ferner kann die Benutzerschnittstelle eine Tastatur, eine Maus und/oder einen berührungsempfindlichen Bildschirm, wie einen Touchscreen, umfassen. Die Benutzerschnittstelle kann ferner einen Sensor zur Spracheingabe, wie ein Mikrofon, einen Sensor zur Bewegungserfassung, wie eine Bildkamera, eine Videokamera oder einen passiven Infrarot (PIR) Sensor, und/oder einen Sensor zum Erfassen einer Beschleunigung oder einer relativen Lage der Benutzerschnittstelle, wie ein Accelerometer oder ein Gyroskop, umfassen.

Die zumindest eine Benutzereingabe kann eine Eingabe von Text, eine Bewegung eines Zeigegerätes, wie einer Maus, ein Drücken einer Taste der Benutzerschnittstelle, eine Spracheingabe und/oder eine Geste sein. Hierbei kann die Benutzereingabe eine oder mehrere der folgenden Charakteristiken aufweisen: eine Tippgeschwindigkeit, ein Druckwert auf eine oder mehrere Tasten der Benutzerschnittstelle, eine Geschwindigkeit einer Bewegung des Zeigegerätes, ein Lautstärkewert der Spracheingabe und/oder eine Geschwindigkeit eines Durchführens einer Geste. Ferner kann mittels des erfindungsgemäßen Verfahrens die Mehrzahl der Charakteristiken einer weiteren Mehrzahl von Benutzereingaben erfasst werden. Beispielsweise beträgt die Mehrzahl 2, 3, 4, 5, 6, 7, 8, 9, 10, 15, 20, 25, 30, 35 , 40, 45 oder 50 und/oder beträgt die weitere Mehrzahl 2, 3, 4, 5, 6, 7, 8, 9, 10, 15, 20, 25, 30, 35 , 40, 45 oder 50.

Das Erfassen der Mehrzahl der Charakteristiken kann ferner mittels des Prozessors der Datenverarbeitungsvorrichtung und/oder mittels eines Sensors der Benutzerschnittstelle durchgeführt werden. Beispielsweise erfasst der Prozessor eine Tippgeschwindigkeit bei einer Eingabe von Text über die Benutzerschnittstelle und/oder weist die Benutzerschnittstelle einen Drucksensor zum Erfassen eines Druckwerts auf eine oder mehrere Tasten der Benutzerschnittstelle auf.

Das Erstellen des Eingabeprofils des Benutzers auf der Basis der erfassten Mehrzahl der Charakteristiken kann ein Verknüpfen der erfassten Mehrzahl der Charakteristiken zu dem Eingabeprofil des Benutzers und/oder ein Korrelieren der erfassten Mehrzahl der Charakteristiken umfassen. Ferner kann das Erstellen des Eingabeprofils des Benutzers ein Bestimmen von statistisch signifikanten Charakteristiken aus der Mehrzahl der Charakteristiken und ein Verknüpfen der bestimmten statistisch signifikanten Charakteristiken zu dem Eingabeprofil umfassen. Das Eingabeprofil kann ferner in einem Speicher der Datenverarbeitungsvorrichtung gespeichert werden, beispielsweise in Form einer Datenbank oder in Form von Massendaten, insbesondere gemäß einem Big-Data-Konzept.

Das Referenzprofil kann ein vorbestimmtes Eingabeprofil sein. Beispielsweise wird das Referenzprofil während einer Lernphase aus erfassten Charakteristiken einer Mehrzahl von Benutzereingaben des Benutzers bestimmt. Ferner kann das Referenzprofil bei einer erfolgreichen Authentifizierung des Benutzers durch das mittels des erfindungsgemäßen Verfahrens erstellte Eingabeprofil des Benutzers ergänzt werden. Hierdurch kann eine kontinuierliche Aktualisierung des Referenzprofils erreicht werden. Gemäß einer Ausführungsform umfasst das Verfahren ferner ein Erfassen eines Benutzernamens und ein Vergleichen des erfassten Benutzernamens mit einem Referenzbenutzernamen. Hierbei kann das Referenzprofil dem Referenzbenutzernamen zugeordnet sein.

Das Vergleichen des erstellten Eingabeprofils des Benutzers mit dem Referenzprofil kann ein Bestimmen eines Übereinstimmungsmaßes zwischen dem erstellten Eingabeprofil des Benutzers und dem Referenzprofil umfassen. Erreicht oder überschreitet das Übereinstimmungsmaß einen vorbestimmten Schwellwert, kann der Benutzer authentifiziert werden. Unterschreitet das Übereinstimmungsmaß den vorbestimmten Schwellwert, kann der Benutzer zur Eingabe einer Kennung, wie einer Kombination aus Benutzername und Passwort, aufgefordert werden.

Gemäß einer Ausführungsform kann das Vergleichen des erstellten Eingabeprofils des Benutzers mit dem Referenzprofil mittels des Prozessors der Datenverarbeitungsvorrichtung durchgeführt werden. Hierbei kann das Referenzprofil in einem Speicher der Datenverarbeitungsvorrichtung vorgespeichert sein. Gemäß einer weiteren Ausführungsform kann die Datenverarbeitungsvorrichtung das erstellte Eingabeprofil an einen Dienstserver aussenden, kann das Vergleichen des erstellten Eingabeprofils des Benutzers mit dem Referenzprofil mittels eines Prozessors des Dienstservers durchgeführt werden, kann die Datenverarbeitungsvorrichtung von dem Dienstserver ein Ergebnis des Vergleichs empfangen und kann die Datenverarbeitungsvorrichtung den Benutzer auf der Basis des empfangenen Ergebnisses authentifizieren.

Gemäß einer Ausführungsform ist eine Charakteristik der Mehrzahl der Charakteristiken eine Eingabegeschwindigkeit, ein Druckwert auf eine Betätigungseinrichtung der Benutzerschnittstelle, ein Eingabemuster, eine Geste, eine Auswahl einer Betätigungseinrichtung der Benutzerschnittstelle, ein Zeitpunkt einer Benutzereingabe oder ein zeitlicher Abstand zwischen zwei Benutzereingaben. Dadurch wird der Vorteil erreicht, dass die Mehrzahl der Charakteristiken effizient erfasst werden kann.

Beispielsweise ist die Charakteristik eine Tippgeschwindigkeit bei einer Eingabe einer Benutzername-Passwort-Kombination, ein Tastendruck auf jeder einzelnen Taste der Benutzerschnittstelle und/oder ein Gesamtdruck auf Tasten der Benutzerschnittstelle, eine Information, ob bei einer Eingabe einer Benutzername-Passwort-Kombination ein Wechsel zwischen Eingabefeldern mittels einer Maus oder durch Drücken einer Tabulator-Taste der Benutzerschnittstelle durchgeführt wurde, eine Information, ob bei einer Eingabe einer Benutzername-Passwort-Kombination eine Eingabebestätigung mittels einer Enter-Taste, einer Return-Taste oder einer Maustaste der Benutzerschnittstelle durchgeführt wurde, eine Mausgeschwindigkeit, ein Mausbewegungsmuster, ein Druck auf eine Maustaste, ein zeitlicher Abstand zwischen zwei aufeinanderfolgenden Benutzereingaben, insbesondere ein Idle Zeitraum, eine Information über eine Anzahl von Zeiten ohne Benutzereingaben, insbesondere von Idle-Zeiten, oder eine Information über einen Zeitpunkt und/oder einen Zeitraum von Benutzereingaben. Ferner kann die Charakteristik eine Information über ein Ausführen eines Makros durch Betätigen einer Taste oder eines Bedienelements, wie eines Rades einer Maus, der Benutzerschnittstelle oder eine Information über die betätigte Taste oder das betätigte Bedienelement sein. Die Charakteristik kann ferner eine Information sein, ob der Benutzer die Benutzerschnittstelle mit der rechten oder der linken Hand bedient. Beispielsweise gibt die Information an, ob der Benutzer eine Rechtshänder-Maus oder eine Linkshänder-Maus benutzt. Ferner kann die Charakteristik eine Information sein, ob der Benutzer eine Maus mit einer Taste, eine Maus mit zwei oder mehr Tasten oder eine Maus mit Scrollrad benutzt.

Gemäß einer Ausführungsform umfasst der Schritt des Erstellens des Eingabeprofils des Benutzers ein Bestimmen von statistisch signifikanten Charakteristiken aus der Mehrzahl der Charakteristiken und ein Verknüpfen der bestimmten statistisch signifikanten Charakteristiken zu dem Eingabeprofil. Dadurch wird der Vorteil erreicht, dass ein zum Speichern des Eingabeprofils benötigter Speicherplatz reduziert und dadurch eine Kostenersparnis erreicht werden kann. Ferner wird der Vorteil erreicht, dass zum Vergleichen des erstellten Eingabeprofils mit dem Referenzprofil eine geringere Rechenleistung erforderlich ist, wodurch eine weitere Kostenersparnis erreicht werden kann.

Die Charakteristiken können statistisch signifikant sein, wenn eine Wahrscheinlichkeit, dass die Charakteristiken durch Zufall erfasst werden, einen vorbestimmten Schwellwert unterschreitet. Hierzu kann mittels des Prozessors der Datenverarbeitungsvorrichtung ein statistischer Test durchgeführt werden. Ferner kann das Verknüpfen der bestimmten statistisch signifikanten Charakteristiken zu dem Eingabeprofil ein Speichern der bestimmten statistisch signifikanten Charakteristiken in Form einer Datenbank oder in Form von Massendaten, insbesondere gemäß einem Big-Data-Konzept, umfassen.

Gemäß einer Ausführungsform umfasst der Schritt des Vergleichens des erstellten Eingabeprofils des Benutzers mit dem Referenzprofil ein Bestimmen eines Übereinstimmungsmaßes zwischen dem erstellten Eingabeprofil des Benutzers und dem Referenzprofil und ein Vergleichen des bestimmten Übereinstimmungsmaßes mit einem vorbestimmten Schwellwert. Dadurch wird der Vorteil erreicht, dass der Benutzer effizient authentifiziert werden kann. Erreicht oder überschreitet das Übereinstimmungsmaß den vorbestimmten Schwellwert, kann der Benutzer authentifiziert werden. Der vorbestimmte Schwellwert kann in einem Speicher der Datenverarbeitungsvorrichtung vorgespeichert sein.

Gemäß einer Ausführungsform wird das Bestimmen des Übereinstimmungsmaßes zwischen dem erstellten Eingabeprofil des Benutzers und dem Referenzprofil mittels eines Mustervergleichs durchgeführt. Dadurch wird der Vorteil erreicht, dass das Bestimmen des Übereinstimmungsmaßes effizienter durchgeführt werden kann. Der Mustervergleich kann ein Vergleich eines in dem Eingabeprofil umfassten Musters mit einem in dem Referenzprofil umfassten Referenzmuster sein. Beispielsweise ist das Muster ein Mausbewegungsmuster und ist das Referenzmuster ein Referenzmausbewegungsmuster. Ferner kann der Mustervergleich ein Vergleich von Ecken, Kanten, relativen Abständen, Positionen, Winkeln und/oder Lagen sein.

Gemäß einer Ausführungsform umfasst das Referenzprofil eine Ausschlussliste, und umfasst der Schritt des Vergleichens des erstellten Eingabeprofils des Benutzers mit dem Referenzprofil einen Vergleich des erstellten Eingabeprofils mit der Ausschlussliste. Dadurch wird der Vorteil erreicht, dass ein Nichtübereinstimmen des erstellten Eingabeprofils mit dem Referenzprofil besonders schnell erkannt werden kann. Die Ausschlussliste kann eine Blacklist sein. Beispielsweise umfasst die Ausschlussliste eine Liste von Webseiten, Suchanfragen, eine IP-Adresse, einen IP-Adressraum und/oder eine Benutzereinstellung, insbesondere eine Spracheinstellung eines Anwendungsprogramms oder eines Betriebssystems der Datenverarbeitungsvorrichtung.

Gemäß einer Ausführungsform wird das erstellte Eingabeprofil des Benutzers über ein Kommunikationsnetzwerk an einen Dienstserver ausgesendet, und wird das Vergleichen des erstellten Eingabeprofils des Benutzers mit dem Referenzprofil durch den Dienstserver ausgeführt. Dadurch wird der Vorteil erreicht, dass ein Vorspeichern des Referenzprofils in der Datenverarbeitungsvorrichtung entfallen kann. Ferner wird der Vorteil erreicht, dass ein zentral gespeichertes Referenzprofil für die Authentifizierung des Benutzers verwendet werden kann.

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein. Ferner kann die Kommunikation über das Kommunikationsnetzwerk verschlüsselt durchgeführt werden. Beispielsweise wird die Kommunikation mittels des Standards Transport Layer Security (TLS) oder Secure Sockets Layer (SSL) verschlüsselt. Ferner kann das erstellte Eingabeprofil des Benutzers verschlüsselt an den Dienstserver ausgesendet werden. Beispielsweise wird das erstellte Eingabeprofil des Benutzers mittels eines asymmetrischen Verschlüsselungsverfahrens, insbesondere mittels eines Public-Key-Verschlüsselungsverfahrens, verschlüsselt.

Gemäß einer Ausführungsform umfasst das Verfahren ferner die Schritte: Aussenden eines Ergebnisses des Vergleichs über das Kommunikationsnetzwerk an die Datenverarbeitungsvorrichtung; und Authentifizieren des Benutzers auf der Basis des Ergebnisses des Vergleichs mittels des Prozessor der Datenverarbeitungsvorrichtung. Dadurch wird der Vorteil erreicht, dass der Benutzer effizient authentifiziert werden kann.

Gemäß einer Ausführungsform weist die Datenverarbeitungsvorrichtung eine Kommunikationsschnittstelle auf, welcher eine Kommunikationsadresse zugeordnet ist, und wird das Eingabeprofil des Benutzers auf der Basis der erfassten Mehrzahl der Charakteristiken und der Kommunikationsadresse der Kommunikationsschnittstelle erstellt. Dadurch wird der Vorteil erreicht, dass der Benutzer schneller authentifiziert werden kann. Stimmt die Kommunikationsadresse der Kommunikationsschnittstelle mit einer in dem Referenzprofil umfassten Referenzkommunikationsadresse überein oder liegt die Kommunikationsadresse der Kommunikationsschnittstelle in einem in dem Referenzprofil umfassten Referenzkommunikationsadressraum, kann der Benutzer authentifiziert werden. Die Kommunikationsadresse kann eine IP-Adresse oder eine MAC-Adresse sein.

Gemäß einer Ausführungsform weist die Benutzerschnittstelle eine benutzerspezifische Benutzereinstellung auf, und wird das Eingabeprofil des Benutzers auf der Basis der erfassten Mehrzahl der Charakteristiken und der benutzerspezifischen Benutzereinstellung erstellt. Dadurch wird der Vorteil erreicht, dass der Benutzer effizient authentifiziert werden kann. Stimmt die benutzerspezifische Benutzereinstellung mit einer in dem Referenzprofil umfassten Referenzbenutzereinstellung überein, kann der Benutzer authentifiziert werden. Die benutzerspezifische Benutzereinstellung kann eine Schriftgröße, eine Sprache oder ein Hintergrundbild sein. Hierbei kann ein Anwendungsprogramm oder ein Betriebssystem, welches auf der Datenverarbeitungsvorrichtung ausgeführt wird, eine Softwareschnittstelle aufweisen, über welche die benutzerspezifische Benutzereinstellung ausgelesen oder erfasst werden kann.

Gemäß einer Ausführungsform bedient der Benutzer mittels der Benutzerschnittstelle ein durch den Prozessor der Datenverarbeitungsvorrichtung ausgeführtes Anwendungsprogramm, und wird das Eingabeprofil des Benutzers auf der Basis der erfassten Mehrzahl der Charakteristiken und einer Information über die Bedienung des Anwendungsprogramm durch den Benutzer erstellt. Dadurch wird der Vorteil erreicht, dass der Benutzer effizient authentifiziert werden kann. Stimmt die Information mit einer in dem Referenzprofil umfassten Referenzinformation überein, kann der Benutzer authentifiziert werden. Die Information kann eine Information über von dem Benutzer besuchte Webseiten und/oder eine Information über von dem Benutzer verwendete Suchbegriffe umfassen.

Gemäß einer Ausführungsform weist die Datenverarbeitungsvorrichtung eine drahtlose Kommunikationsschnittstelle zur drahtlosen Kommunikation mit einem Sicherheits-Token auf, ist die drahtlose Kommunikationsschnittstelle zum Erfassen einer Signalstärke eines von dem Sicherheits-Token ausgesendeten Kommunikationssignals ausgebildet, und wird das Eingabeprofil des Benutzers auf der Basis der erfassten Mehrzahl der Charakteristiken und der erfassten Signalstärke erstellt. Dadurch wird der Vorteil erreicht, dass der Benutzer effizient authentifiziert werden kann. Stimmt die erfasste Signalstärke mit einer in dem Referenzprofil umfassten Referenzsignalstärke überein oder liegt die erfasste Signalstärke in einem in dem Referenzprofil umfassten Referenzsignalstärkebereich, kann der Benutzer authentifiziert werden.

Die drahtlose Kommunikationsschnittstelle kann zu einer Kommunikation mittels Radio-Frequency-Identification (RFID), beispielsweise nach dem Standard ISO/IEC 14443 oder ISO/IEC 18000-3, ausgebildet sein. Ferner kann die drahtlose Kommunikationsschnittstelle zu einer Kommunikation mittels Near-Field-Communication (NFC), beispielsweise nach dem Standard ISO/IEC 14443 oder ISO/IEC 18092, ausgebildet sein. Die drahtlose Kommunikationsschnittstelle kann ferner zu einer Kommunikation mittels des Bluetooth-Standards ausgebildet sein. Ferner kann das Sicherheits-Token ein Identifikationsdokument, ein Autoschlüssel, ein Gebäudeschlüssel, ein Smartphone, eine Smartwatch, ein Radiofrequenzidentifikations-Transponder, ein Nahfeldkommunikations-Transponder oder ein Bluetooth-Token sein.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren Schaltkreis, beispielsweise einen RFID-Chip umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Gemäß einer Ausführungsform ist die drahtlose Kommunikationsschnittstelle ferner zum Erfassen einer Position des Sicherheits-Tokens ausgebildet, und wird das Eingabeprofil des Benutzers auf der Basis der erfassten Mehrzahl der Charakteristiken und der erfassten Position erstellt. Dadurch wird der Vorteil erreicht, dass der Benutzer effizient authentifiziert werden kann. Stimmt die erfasste Position mit einer in dem Referenzprofil umfassten Referenzposition überein, kann der Benutzer authentifiziert werden. Die drahtlose Kommunikationsschnittstelle kann ausgebildet sein, die Position des Sicherheits-Tokens mittels Triangulation zu erfassen.

Gemäß einer Ausführungsform weist die Datenverarbeitungsvorrichtung eine kontaktbehaftete Kommunikationsschnittstelle mit einer Aufnahme auf, wobei in die Aufnahme der kontaktbehafteten Kommunikationsschnittstelle ein Sicherheits-Token einführbar ist, ist die kontaktbehaftete Kommunikationsschnittstelle ausgebildet, eine Einführgeschwindigkeit des Sicherheits-Tokens in die Aufnahme der kontaktbehafteten Kommunikationsschnittstelle zu erfassen, und wird das Eingabeprofil des Benutzers auf der Basis der erfassten Mehrzahl der Charakteristiken und der erfassten Einführgeschwindigkeit erstellt. Dadurch wird der Vorteil erreicht, dass der Benutzer effizient authentifiziert werden kann. Stimmt die erfasste Einführgeschwindigkeit mit einer in dem Referenzprofil umfassten Referenzeinführgeschwindigkeit überein oder liegt die erfasste Signalstärke in einem in dem Referenzprofil umfassten Referenzeinführgeschwindigkeitsbereich, kann der Benutzer authentifiziert werden. Das Sicherheits-Token kann eine Smartcard oder ein Identifikationsdokument sein.

Gemäß einer Ausführungsform umfasst das Verfahren ferner ein Erfassen einer Kennung und ein Vergleichen der erfassten Kennung mit einer Referenzkennung, um den Benutzer zu authentifizieren. Dadurch wird der Vorteil erreicht, dass ein effizientes Konzept für eine Zwei-Faktor-Authentifizierung geschaffen werden kann. Die Kennung kann ein Passwort, eine Persönliche Identifikationsnummer (PIN), ein Benutzername oder eine Kombination aus Benutzername und Passwort sein. Gemäß einer Ausführungsform kann das Referenzprofil der Referenzkennung zugeordnet sein.

Gemäß einer Ausführungsform wird das Verfahren in Echtzeit ausgeführt. Gemäß einer weiteren Ausführungsform wird mittels des Verfahrens eine Echtzeitanalyse der zumindest einen Benutzereingabe durchgeführt.

Gemäß einem zweiten Aspekt betrifft die Erfindung eine Datenverarbeitungsvorrichtung zum Authentifizieren eines Benutzers, wobei die Datenverarbeitungsvorrichtung die folgenden Merkmale aufweist: eine Benutzerschnittstelle zum Empfangen einer Benutzereingabe durch den Benutzer; und einen Prozessor, welcher ausgebildet ist, eine Mehrzahl von Charakteristiken zumindest einer Benutzereingabe des Benutzers mittels der Benutzerschnittstelle zu erfassen, ein Eingabeprofil des Benutzers auf der Basis der erfassten Mehrzahl der Charakteristiken zu erstellen, und den Benutzer unter Verwendung des erstellten Eingabeprofils zu authentifizieren. Dadurch wird der Vorteil erreicht, dass der Benutzer effizient authentifiziert werden kann.

Das erfindungsgemäße Verfahren zum Authentifizieren eines Benutzers kann mittels der erfindungsgemäßen Datenverarbeitungsvorrichtung durchgeführt werden. Weitere Merkmale der erfindungsgemäßen Datenverarbeitungsvorrichtung ergeben sich unmittelbar aus den Merkmalen der im Rahmen des erfindungsgemäßen Verfahrens beschriebenen Datenverarbeitungsvorrichtung.

Gemäß einer Ausführungsform ist der Prozessor ausgebildet, das erstellte Eingabeprofil mit einem Referenzprofil zu vergleichen, um den Benutzer zu authentifizieren. Dadurch wird der Vorteil erreicht, dass ein Aussenden des erstellten Eingabeprofils an einen Dienstserver entfallen kann.

Gemäß einer Ausführungsform weist die Datenverarbeitungsvorrichtung ferner eine Kommunikationsschnittstelle auf, ist die Kommunikationsschnittstelle ausgebildet, das erstellte Eingabeprofil des Benutzers über ein Kommunikationsnetzwerk an einen Dienstserver auszusenden und ansprechend auf das Aussenden des erstellten Eingabeprofils des Benutzers ein Ergebnis eines Vergleichs des erstellten Eingabeprofils des Benutzers mit einem Referenzprofil von dem Dienstserver zu empfangen, und ist der Prozessor ausgebildet, den Benutzer in Abhängigkeit von dem empfangenen Ergebnis des Vergleichs zu authentifizieren. Dadurch wird der Vorteil erreicht, dass ein zentral gespeichertes Referenzprofil für die Authentifizierung des Benutzers verwendet werden kann.

Gemäß einem dritten Aspekt betrifft die Erfindung ein Computerprogramm mit einem Programmcode zum Ausführen des erfindungsgemäßen Verfahrens, wenn der Programmcode auf einem Computer ausgeführt wird. Dadurch wird der Vorteil erreicht, dass ein effizientes Computerprogramm zur Authentifizierung des Benutzers geschaffen werden kann. Der Programmcode kann einen Algorithmus zur Durchführung des erfindungsgemäßen Verfahrens umfassen. Hierbei kann der Algorithmus einen Big Data Algorithmus zur eindeutigen Authentifizierung einer digitalen Identität bilden.

Das Computerprogramm kann eine Folge von Befehlen für einen Prozessor des Computers umfassen. Ferner kann das Computerprogramm in Form eines maschinenlesbaren Programmcodes vorliegen. Der Computer kann einen Prozessor, einen Speicher, eine Eingabeschnittstelle und/oder eine Ausgabeschnittstelle umfassen. Hierbei kann der Prozessor des Computers ausgebildet sein, das Computerprogramm auszuführen.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein schematisches Diagramm eines Verfahrens zum Authentifizieren eines Benutzers einer Datenverarbeitungsvorrichtung; und
- Fig. 2: eine schematische Darstellung einer Datenverarbeitungsvorrichtung zum Authentifizieren eines Benutzers.

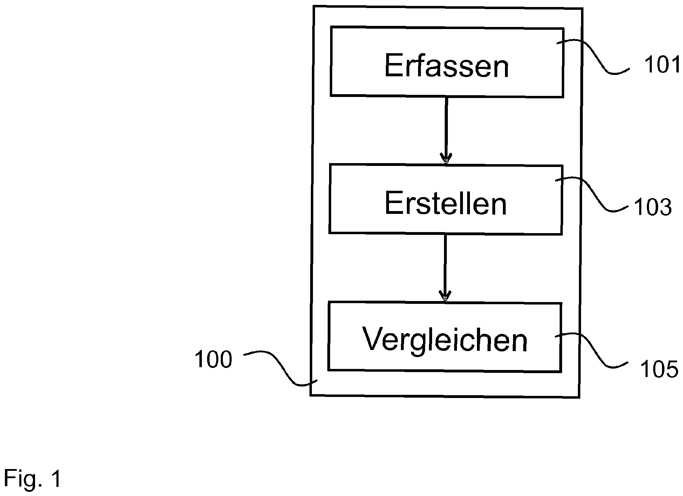

Fig. 1 zeigt ein schematisches Diagramm eines Verfahrens 100 zum Authentifizieren eines Benutzers einer Datenverarbeitungsvorrichtung. Das Verfahren 100 zum Authentifizieren des Benutzers der Datenverarbeitungsvorrichtung, wobei die Datenverarbeitungsvorrichtung eine Benutzerschnittstelle zum Eingeben einer Benutzerangabe durch den Benutzer aufweist, umfasst die Schritte: Erfassen 101 einer Mehrzahl von Charakteristiken zumindest einer Benutzereingabe des Benutzers mittels der Datenverarbeitungsvorrichtung; Erstellen 103 eines Eingabeprofils des Benutzers auf der Basis der erfassten Mehrzahl der Charakteristiken mittels eines Prozessors der Datenverarbeitungsvorrichtung; und Vergleichen 105 des erstellten Eingabeprofils des Benutzers mit einem Referenzprofil, um den Benutzer zu authentifizieren.

Das Authentifizieren des Benutzers kann eine Bestimmung der Identität des Benutzers umfassen. Ferner kann durch das Authentifizieren des Benutzers eine digitale Identität des Benutzers bestimmt werden.

Die Datenverarbeitungsvorrichtung kann ein Computer, ein Mobiltelefon, wie ein Smartphone, ein Tablet-Computer, ein Bankautomat, wie ein Geldautomat, ein Verkaufsautomat, ein Element eines Zugangskontrollsystems und/oder ein Bordcomputer, wie ein Bordcomputer eines Kraftfahrzeuges, sein. Ferner kann die Benutzerschnittstelle eine Tastatur, eine Maus und/oder einen berührungsempfindlichen Bildschirm, wie einen Touchscreen, umfassen. Die Benutzerschnittstelle kann ferner einen Sensor zur Spracheingabe, wie ein Mikrofon, einen Sensor zur Bewegungserfassung, wie eine Bildkamera, eine Videokamera oder einen passiven Infrarot (PIR) Sensor, und/oder einen Sensor zum Erfassen einer Beschleunigung oder einer relativen Lage der Benutzerschnittstelle, wie ein Accelerometer oder ein Gyroskop, umfassen.

Die zumindest eine Benutzereingabe kann eine Eingabe von Text, eine Bewegung eines Zeigegerätes, wie einer Maus, ein Drücken einer Taste der Benutzerschnittstelle, eine Spracheingabe und/oder eine Geste sein. Hierbei kann die Benutzereingabe eine oder mehrere der folgenden Charakteristiken aufweisen: eine Tippgeschwindigkeit, ein Druckwert auf eine oder mehrere Tasten der Benutzerschnittstelle, eine Geschwindigkeit einer Bewegung des Zeigegerätes, ein Lautstärkewert der Spracheingabe und/oder eine Geschwindigkeit eines Durchführens einer Geste. Ferner kann mittels des erfindungsgemäßen Verfahrens die Mehrzahl der Charakteristiken einer weiteren Mehrzahl von Benutzereingaben erfasst werden. Beispielsweise beträgt die Mehrzahl 2, 3, 4, 5, 6, 7, 8, 9, 10, 15, 20, 25, 30, 35 , 40, 45 oder 50 und/oder beträgt die weitere Mehrzahl 2, 3, 4, 5, 6, 7, 8, 9, 10, 15, 20, 25, 30, 35 , 40, 45 oder 50.

Das Erfassen 101 der Mehrzahl der Charakteristiken kann ferner mittels des Prozessors der Datenverarbeitungsvorrichtung und/oder mittels eines Sensors der Benutzerschnittstelle durchgeführt werden. Beispielsweise erfasst der Prozessor eine Tippgeschwindigkeit bei einer Eingabe von Text über die Benutzerschnittstelle und/oder weist die Benutzerschnittstelle einen Drucksensor zum Erfassen eines Druckwerts auf eine oder mehrere Tasten der Benutzerschnittstelle auf.

Das Erstellen 103 des Eingabeprofils des Benutzers auf der Basis der erfassten Mehrzahl der Charakteristiken kann ein Verknüpfen der erfassten Mehrzahl der Charakteristiken zu dem Eingabeprofil des Benutzers und/oder ein Korrelieren der erfassten Mehrzahl der Charakteristiken umfassen. Ferner kann das Erstellen 103 des Eingabeprofils des Benutzers ein Bestimmen von statistisch signifikanten Charakteristiken aus der Mehrzahl der Charakteristiken und ein Verknüpfen der bestimmten statistisch signifikanten Charakteristiken zu dem Eingabeprofil umfassen. Das Eingabeprofil kann ferner in einem Speicher der Datenverarbeitungsvorrichtung gespeichert werden, beispielsweise in Form einer Datenbank oder in Form von Massendaten, insbesondere gemäß einem Big-Data-Konzept.

Das Referenzprofil kann ein vorbestimmtes Eingabeprofil sein. Beispielsweise wird das Referenzprofil während einer Lernphase aus erfassten Charakteristiken einer Mehrzahl von Benutzereingaben des Benutzers bestimmt. Ferner kann das Referenzprofil bei einer erfolgreichen Authentifizierung des Benutzers durch das mittels des erfindungsgemäßen Verfahrens erstellte Eingabeprofil des Benutzers ergänzt werden. Hierdurch kann eine kontinuierliche Aktualisierung des Referenzprofils erreicht werden. Gemäß einer Ausführungsform umfasst das Verfahren ferner ein Erfassen eines Benutzernamens und ein Vergleichen des erfassten Benutzernamens mit einem Referenzbenutzernamen. Hierbei kann das Referenzprofil dem Referenzbenutzernamen zugeordnet sein.

Das Vergleichen 105 des erstellten Eingabeprofils des Benutzers mit dem Referenzprofil kann ein Bestimmen eines Übereinstimmungsmaßes zwischen dem erstellten Eingabeprofil des Benutzers und dem Referenzprofil umfassen. Erreicht oder überschreitet das Übereinstimmungsmaß einen vorbestimmten Schwellwert, kann der Benutzer authentifiziert werden. Unterschreitet das Übereinstimmungsmaß den vorbestimmten Schwellwert, kann der Benutzer zur Eingabe einer Kennung, wie einer Kombination aus Benutzername und Passwort, aufgefordert werden.

Gemäß einer Ausführungsform kann das Vergleichen 105 des erstellten Eingabeprofils des Benutzers mit dem Referenzprofil mittels des Prozessors der Datenverarbeitungsvorrichtung durchgeführt werden. Hierbei kann das Referenzprofil in einem Speicher der Datenverarbeitungsvorrichtung vorgespeichert sein. Gemäß einer weiteren Ausführungsform kann die Datenverarbeitungsvorrichtung das erstellte Eingabeprofil an einen Dienstserver aussenden, kann das Vergleichen 105 des erstellten Eingabeprofils des Benutzers mit dem Referenzprofil mittels eines Prozessors des Dienstservers durchgeführt werden, kann die Datenverarbeitungsvorrichtung von dem Dienstserver ein Ergebnis des Vergleichs empfangen und kann die Datenverarbeitungsvorrichtung den Benutzer auf der Basis des empfangenen Ergebnisses authentifizieren.

Gemäß einer Ausführungsform ist eine Charakteristik der Mehrzahl der Charakteristiken eine Eingabegeschwindigkeit, ein Druckwert auf eine Betätigungseinrichtung der Benutzerschnittstelle, ein Eingabemuster, eine Geste, eine Auswahl einer Betätigungseinrichtung der Benutzerschnittstelle, ein Zeitpunkt einer Benutzereingabe oder ein zeitlicher Abstand zwischen zwei Benutzereingaben.

Beispielsweise ist die Charakteristik eine Tippgeschwindigkeit bei einer Eingabe einer Benutzername-Passwort-Kombination, ein Tastendruck auf jeder einzelnen Taste der Benutzerschnittstelle und/oder ein Gesamtdruck auf Tasten der Benutzerschnittstelle, eine Information, ob bei einer Eingabe einer Benutzername-Passwort-Kombination ein Wechsel zwischen Eingabefeldern mittels einer Maus oder durch Drücken einer Tabulator-Taste der Benutzerschnittstelle durchgeführt wurde, eine Information, ob bei einer Eingabe einer Benutzername-Passwort-Kombination eine Eingabebestätigung mittels einer Enter-Taste, einer Return-Taste oder einer Maustaste der Benutzerschnittstelle durchgeführt wurde, eine Mausgeschwindigkeit, ein Mausbewegungsmuster, ein Druck auf eine Maustaste, ein zeitlicher Abstand zwischen zwei aufeinanderfolgenden Benutzereingaben, insbesondere ein Idle Zeitraum, eine Information über eine Anzahl von Zeiten ohne Benutzereingaben, insbesondere von Idle-Zeiten, oder eine Information über einen Zeitpunkt und/oder einen Zeitraum von Benutzereingaben. Ferner kann die Charakteristik eine Information über ein Ausführen eines Makros durch Betätigen einer Taste oder eines Bedienelements, wie eines Rades einer Maus, der Benutzerschnittstelle oder eine Information über die betätigte Taste oder das betätigte Bedienelement sein. Die Charakteristik kann ferner eine Information sein, ob der Benutzer die Benutzerschnittstelle mit der rechten oder der linken Hand bedient. Beispielsweise gibt die Information an, ob der Benutzer eine Rechtshänder-Maus oder eine Linkshänder-Maus benutzt. Ferner kann die Charakteristik eine Information sein, ob der Benutzer eine Maus mit einer Taste, eine Maus mit zwei oder mehr Tasten oder eine Maus mit Scrollrad benutzt.

Gemäß einer Ausführungsform kann die zumindest eine Benutzereingabe eine Texteingabe, insbesondere eine Eingabe von Benutzername, wie Username, und Passwort, sein. Hierbei kann eine erfasste Charakteristik der Benutzereingabe eine Tippgeschwindigkeit sein. Beispielsweise wird die Tippgeschwindigkeit mittels des Prozessors der Datenverarbeitungsvorrichtung erfasst. Ferner kann hierbei eine erfasste Charakteristik der Benutzereingabe ein Tastendruck auf jeder einzelnen Taste und/oder ein Gesamtdruck auf Tasten der Benutzerschnittstelle sein. Beispielsweise weist die Benutzerschnittstelle einen Drucksensor zum Erfassen eines Druckwertes auf eine oder mehrere Tasten auf.

Gemäß einer weiteren Ausführungsform kann die zumindest eine Benutzereingabe eine Eingabe mittels einer Maus sein. Hierbei kann eine erfasste Charakteristik der Benutzereingabe eine Mausgeschwindigkeit oder ein Mausbewegungsmuster sein. Beispielsweise wird die Mausgeschwindigkeit oder das Mausbewegungsmuster mittels des Prozessors der Datenverarbeitungsvorrichtung erfasst. Ferner kann hierbei eine erfasste Charakteristik der Benutzereingabe ein Tastendruck auf eine Maustaste sein. Beispielsweise weist die Benutzerschnittstelle oder die Maus einen Drucksensor zum Erfassen eines Druckwertes auf eine Maustaste auf.

Gemäß einer weiteren Ausführungsform kann die zumindest eine Benutzereingabe ein Ausfüllen und Absenden eines Formulars, insbesondere eines Anmeldeformulars, sein. Hierbei kann eine erfasste Charakteristik der Benutzereingabe eine Information sein, ob der Benutzer zwischen unterschiedlichen Eingabefeldern des Formulars mittels der Maus oder der Tabulator-Taste wechselt. Beispielsweise umfasst ein Anwendungsprogramm, welches das Formular erstellt, eine Softwareschnittstelle, über welche der Prozessor der Datenverarbeitungsvorrichtung auslesen kann, ob der Benutzer zwischen unterschiedlichen Eingabefeldern des Formulars mittels der Maus oder der Tabulator-Taste wechselt. Ferner kann hierbei eine erfasste Charakteristik der Benutzereingabe eine Information sein, ob der Benutzer eine Schaltfläche des Formulars zur Eingabebestätigung mittels einer Enter-Taste, einer Return-Taste oder einer Maustaste betätigt. Beispielsweise erfasst der Prozessor der Datenerfassungsvorrichtung, dass der Zeiger der Maus über der Schaltfläche schwebt und die Maustaste gedrückt wird, um die Schaltfläche zu betätigen.

Gemäß einer weiteren Ausführungsform kann eine erfasste Charakteristik der zumindest einen Benutzereingabe ein Zeitpunkt der Benutzereingabe oder ein zeitlicher Abstand zwischen zwei, insbesondere aufeinanderfolgenden, Benutzereingaben sein. Beispielsweise umfasst die erfasste Charakteristik Zeiträume ohne Benutzereingabe, wie Idle-Zeiträume, eine Anzahl Zeiten ohne Benutzereingabe, wie Idle-Zeiten, oder einen Zeitpunkt und einen Zeitraum der zumindest einen Benutzereingabe, wie einer Nutzung.

Gemäß einer weiteren Ausführungsform weist die Benutzerschnittstelle eine benutzerspezifische Benutzereinstellung auf, und wird das Eingabeprofil des Benutzers auf der Basis der erfassten Mehrzahl der Charakteristiken und der benutzerspezifischen Benutzereinstellung erstellt. Stimmt die benutzerspezifische Benutzereinstellung mit einer in dem Referenzprofil umfassten Referenzbenutzereinstellung überein, kann der Benutzer authentifiziert werden. Die benutzerspezifische Benutzereinstellung kann eine Schriftgröße, eine Sprache oder ein Hintergrundbild sein. Hierbei kann ein Anwendungsprogramm oder ein Betriebssystem, welches auf der Datenverarbeitungsvorrichtung ausgeführt wird, eine Softwareschnittstelle aufweisen, mittels welcher die benutzerspezifische Benutzereinstellung ausgelesen oder erfasst werden kann.

Gemäß einer weiteren Ausführungsform kann das Verfahren 100 unter Verwendung eines selbstlernenden Algorithmus ausgeführt werden, welcher mit dem charakteristischen Verhalten des Benutzers konfrontiert wird. Der so trainierte Algorithmus kann dann aufgrund des Benutzerverhaltens digital oder analog selbständig entscheiden, ob das Benutzerverhalten zu einer angegebenen Identität passt oder nicht. Ohne weitere Benutzerinteraktion kann die Identität bedienungsfreundlich und sicher bestimmt werden.

Gemäß einer weiteren Ausführungsform kann das Verfahren 100 unter Verwendung eines Algorithmus ausgeführt werden, welcher zur Bestimmung einer Identität als ein möglicher Faktor einer Zwei-Faktor-Authentifizierung oder Mehr-Faktor-Authentifizierung bzw. als alleinige Identifizierungs- und Authentifizierungsmethode, wie einer Ein-Faktor-Authentifizierung, dient. Der Algorithmus kann ressourcenschonend im Hintergrund eines Betriebssystems, insbesondere plattformunabhängig, laufen. Der Algorithmus kann ferner selbstlernend mittels Big Data Ansätzen charakteristische und statistisch signifikante Merkmale aus dem Verhalten eines Benutzers identifizieren.

Gemäß einer weiteren Ausführungsform kann das Verfahren 100 unter Verwendung eines Algorithmus ausgeführt werden, wobei die Art und Weise der Algorithmusprägung für einen möglichen Dritten nicht nachvollziehbar ist. Das heißt, die zur Identifizierung oder Authentifizierung herangezogenen Merkmale werden nicht im Klartext übertragen oder vorgehalten. Damit kann ein Datenschutz des Benutzers sichergestellt werden.

Gemäß einer weiteren Ausführungsform kann das Verfahren 100 unter Verwendung eines selbstlernenden Algorithmus ausgeführt werden, wobei mit Hilfe des selbstlernenden Algorithmus die Identität des Benutzers bedienungsfreundlich bestimmt werden kann. Da mit Hilfe von Big Data zahlreiche eindeutige Faktoren einer Identität bestimmt werden können, kann das Verfahren 100, oder eine das Verfahren 100 ausführende Software, als sicherer Anker für eine Ein- bzw. Mehr-Faktoridentifizierung eines Benutzers verwendet werden. So kann beispielsweise eine Benutzername-Passwort-Kombination durch den selbstlernenden Algorithmus ergänzt bzw. sogar ersetzt werden.

Gemäß einer weiteren Ausführungsform kann das Verfahren 100 unter Verwendung eines selbstlernenden Algorithmus und Big Data Ansätzen ausgeführt werden, wobei mit einer Hintergrundsoftware die Identität eines Benutzers benutzerfreundlich und Datenschutzkonform ermittelt werden kann.

Gemäß einer weiteren Ausführungsform kann mittels des Verfahrens 100 eine selbständige Authentifizierung oder Identifizierung des Benutzers durch eine Hintergrundsoftware erreicht werden.

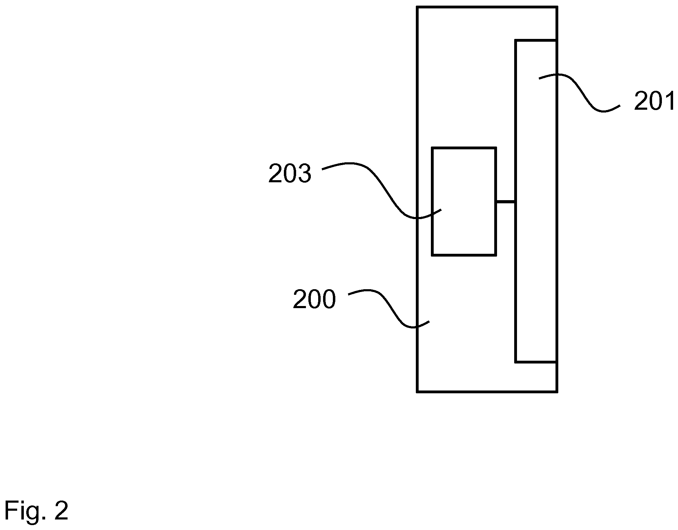

Fig. 2 zeigt eine schematische Darstellung einer Datenverarbeitungsvorrichtung 200 zum Authentifizieren eines Benutzers. Die Datenverarbeitungsvorrichtung 200 zum Authentifizieren des Benutzers weist die folgenden Merkmale auf: eine Benutzerschnittstelle 201 zum Empfangen einer Benutzereingabe durch den Benutzer; und einen Prozessor 203, welcher ausgebildet ist, eine Mehrzahl von Charakteristiken zumindest einer Benutzereingabe des Benutzers mittels der Benutzerschnittstelle 201 zu erfassen, ein Eingabeprofil des Benutzers auf der Basis der erfassten Mehrzahl der Charakteristiken zu erstellen, und den Benutzer unter Verwendung des erstellten Eingabeprofils zu authentifizieren. Hierbei ist die Benutzerschnittstelle 201 durch einen berührungsempfindlichen Bildschirm, wie einen Touchscreen, gebildet. Beispielsweise wird mittels des berührungsempfindlichen Bildschirms eine Bildschirmtastatur dargestellt, welche zur Texteingabe verwendet werden kann.

### Bezugszeichenliste

- 100: Verfahren
- 101: Erfassen
- 103: Erstellen
- 105: Vergleichen

- 200: Datenverarbeitungsvorrichtung
- 201: Benutzerschnittstelle
- 203: Prozessor

## Patentansprüche

1. Verfahren (100) zum Authentifizieren eines Benutzers einer Datenverarbeitungsvorrichtung (200), wobei die Datenverarbeitungsvorrichtung (200) eine Benutzerschnittstelle (201) zum Eingeben einer Benutzerangabe durch den Benutzer aufweist, mit:
Erfassen (101) einer Mehrzahl von Charakteristiken zumindest einer Benutzereingabe des Benutzers mittels der Datenverarbeitungsvorrichtung (200);
Erstellen (103) eines Eingabeprofils des Benutzers auf der Basis der erfassten Mehrzahl der Charakteristiken mittels eines Prozessors (203) der Datenverarbeitungsvorrichtung (200); und
Vergleichen (105) des erstellten Eingabeprofils des Benutzers mit einem Referenzprofil, um den Benutzer zu authentifizieren,
wobei eine Charakteristik der Mehrzahl der Charakteristiken eine Eingabegeschwindigkeit, ein Druckwert auf eine Betätigungseinrichtung der Benutzerschnittstelle (201), ein Eingabemuster, eine Geste, eine Auswahl einer Betätigungseinrichtung der Benutzerschnittstelle (201), ein Zeitpunkt einer Benutzereingabe oder ein zeitlicher Abstand zwischen zwei Benutzereingaben ist,
wobei der Schritt des Erstellens (103) des Eingabeprofils des Benutzers ein Bestimmen von statistisch signifikanten Charakteristiken aus der Mehrzahl der Charakteristiken und ein Verknüpfen der bestimmten statistisch signifikanten Charakteristiken zu dem Eingabeprofil umfasst,
wobei der Schritt des Vergleichens (103) des erstellten Eingabeprofils des Benutzers mit dem Referenzprofil ein Bestimmen eines Übereinstimmungsmaßes zwischen dem erstellten Eingabeprofil des Benutzers und dem Referenzprofil und ein Vergleichen des bestimmten Übereinstimmungsmaßes mit einem vorbestimmten Schwellwert umfasst.

2. Verfahren (100) nach Anspruch 1, wobei das Bestimmen des Übereinstimmungsmaßes zwischen dem erstellten Eingabeprofil des Benutzers und dem Referenzprofil mittels eines Mustervergleichs durchgeführt wird.

3. Verfahren (100) nach einem der vorstehenden Ansprüche, wobei das Referenzprofil eine Ausschlussliste umfasst, und wobei der Schritt des Vergleichens (105) des erstellten Eingabeprofils des Benutzers mit dem Referenzprofil einen Vergleich des erstellten Eingabeprofils mit der Ausschlussliste umfasst.

4. Verfahren (100) nach einem der vorstehenden Ansprüche, wobei das erstellte Eingabeprofil des Benutzers über ein Kommunikationsnetzwerk an einen Dienstserver ausgesendet wird, und wobei das Vergleichen (105) des erstellten Eingabeprofils des Benutzers mit dem Referenzprofil durch den Dienstserver ausgeführt wird.

5. Verfahren (100) nach einem der vorstehenden Ansprüche, wobei die Datenverarbeitungsvorrichtung (200) eine Kommunikationsschnittstelle aufweist, welcher eine Kommunikationsadresse zugeordnet ist, und wobei das Eingabeprofil des Benutzers auf der Basis der erfassten Mehrzahl der Charakteristiken und der Kommunikationsadresse der Kommunikationsschnittstelle erstellt wird.

6. Verfahren (100) nach einem der vorstehenden Ansprüche, wobei die Benutzerschnittstelle (201) eine benutzerspezifische Benutzereinstellung aufweist, und wobei das Eingabeprofil des Benutzers auf der Basis der erfassten Mehrzahl der Charakteristiken und der benutzerspezifischen Benutzereinstellung erstellt wird.

7. Verfahren (100) nach einem der vorstehenden Ansprüche, wobei die Datenverarbeitungsvorrichtung (200) eine drahtlose Kommunikationsschnittstelle zur drahtlosen Kommunikation mit einem Sicherheits-Token aufweist, wobei die drahtlose Kommunikationsschnittstelle zum Erfassen einer Signalstärke eines von dem Sicherheits-Token ausgesendeten Kommunikationssignals ausgebildet ist, und wobei das Eingabeprofil des Benutzers auf der Basis der erfassten Mehrzahl der Charakteristiken und der erfassten Signalstärke erstellt wird.

8. Verfahren (100) nach einem der vorstehenden Ansprüche, wobei das Verfahren (100) ferner ein Erfassen einer Kennung und ein Vergleichen der erfassten Kennung mit einer Referenzkennung umfasst, um den Benutzer zu authentifizieren.

9. Datenverarbeitungsvorrichtung (200) zum Authentifizieren eines Benutzers, wobei die Datenverarbeitungsvorrichtung (200) die folgenden Merkmale aufweist:
eine Benutzerschnittstelle (201) zum Empfangen einer Benutzereingabe durch den Benutzer; und
einen Prozessor (203), welcher ausgebildet ist, eine Mehrzahl von Charakteristiken zumindest einer Benutzereingabe des Benutzers mittels der Benutzerschnittstelle (201) zu erfassen, ein Eingabeprofil des Benutzers auf der Basis der erfassten Mehrzahl der Charakteristiken zu erstellen, und den Benutzer unter Verwendung des erstellten Eingabeprofils zu authentifizieren,
wobei der Prozessor (203) ausgebildet ist, das erstellte Eingabeprofil mit einem Referenzprofil zu vergleichen, um den Benutzer zu authentifizieren,
wobei eine Charakteristik der Mehrzahl der Charakteristiken eine Eingabegeschwindigkeit, ein Druckwert auf eine Betätigungseinrichtung der Benutzerschnittstelle (201), ein Eingabemuster, eine Geste, eine Auswahl einer Betätigungseinrichtung der Benutzerschnittstelle (201), ein Zeitpunkt einer Benutzereingabe oder ein zeitlicher Abstand zwischen zwei Benutzereingaben ist,
wobei der Schritt des Erstellens des Eingabeprofils des Benutzers ein Bestimmen von statistisch signifikanten Charakteristiken aus der Mehrzahl der Charakteristiken und ein Verknüpfen der bestimmten statistisch signifikanten Charakteristiken zu dem Eingabeprofil umfasst,
wobei der Schritt des Vergleichens des erstellten Eingabeprofils des Benutzers mit dem Referenzprofil ein Bestimmen eines Übereinstimmungsmaßes zwischen dem erstellten Eingabeprofil des Benutzers und dem Referenzprofil und ein Vergleichen des bestimmten Übereinstimmungsmaßes mit einem vorbestimmten Schwellwert umfasst.

10. Datenverarbeitungsvorrichtung (200) nach Anspruch 9, wobei die Datenverarbeitungsvorrichtung (200) ferner eine Kommunikationsschnittstelle aufweist, wobei die Kommunikationsschnittstelle ausgebildet ist, das erstellte Eingabeprofil des Benutzers über ein Kommunikationsnetzwerk an einen Dienstserver auszusenden und ansprechend auf das Aussenden des erstellten Eingabeprofils des Benutzers ein Ergebnis eines Vergleichs des erstellten Eingabeprofils des Benutzers mit einem Referenzprofil von dem Dienstserver zu empfangen, und wobei der Prozessor (203) ausgebildet ist, den Benutzer in Abhängigkeit von dem empfangenen Ergebnis des Vergleichs zu authentifizieren.

11. Computerprogramm mit einem Programmcode zum Ausführen des Verfahrens (100) nach einem der Ansprüche 1 bis 8, wenn der Programmcode auf einem Computer ausgeführt wird.

## Claims

1. A method (100) for authenticating a user of a data processing device (200), wherein the data processing device (200) comprises a user interface (201) for inputting a user information by the user, the method (100) comprising:
capturing (101) a plurality of characteristics of at least one user input of the user by the data processing device (200);
generating (103) an input profile of the user on the basis of the captured plurality of characteristics by a processor (203) of the data processing device (200); and
comparing (105) the generated input profile of the user with a reference profile in order to authenticate the user,
wherein a characteristic of the plurality of characteristics is an input speed, a pressure value on an actuation device of the user interface (201), an input pattern, a gesture, a selection of an actuation device of the user interface (201), a time of a user input or a time interval between two user inputs,
wherein the step of generating (103) the input profile of the user comprises determining statistically significant characteristics from the plurality of characteristics and linking the determined statistically significant characteristics to the input profile,
wherein the step of comparing (103) the generated input profile of the user with the reference profile comprises determining a degree of matching between the generated input profile of the user and the reference profile and comparing the determined degree of matching with a predetermined threshold value.

2. The method (100) according to claim 1, wherein the determining of the degree of matching between the generated input profile of the user and the reference profile is performed by a pattern comparison.

3. The method (100) according to any one of the preceding claims, wherein the reference profile comprises an exclusion list, and wherein the step of comparing (105) the generated input profile of the user with the reference profile comprises a comparison of the generated input profile with the exclusion list.

4. The method (100) according to any one of the preceding claims, wherein the generated input profile of the user is sent out via a communication network to a service server, and wherein the comparing (105) of the generated input profile of the user with the reference profile is performed by the service server.

5. The method (100) according to any one of the preceding claims, wherein the data processing device (200) comprises a communication interface to which a communication address is assigned, and wherein the input profile of the user is generated on the basis of the captured plurality of characteristics and the communication address of the communication interface.

6. The method (100) according to any one of the preceding claims, wherein the user interface (201) comprises a user-specific user setting, and wherein the input profile of the user is generated on the basis of the captured plurality of characteristics and the user-specific user setting.

7. The method (100) according to any one of the preceding claims, wherein the data processing device (200) comprises a wireless communication interface for wireless communication with a security token, wherein the wireless communication interface is configured to capture a signal strength of a communication signal transmitted by the security token, and wherein the input profile of the user is generated on the basis of the captured plurality of characteristics and the captured signal strength.

8. The method (100) according to any one of the preceding claims, wherein the method (100) further comprises capturing an identifier and comparing the captured identifier with a reference identifier in order to authenticate the user.

9. A data processing device (200) for authenticating a user, wherein the data processing device (200) comprises the following features:
a user interface (201) for receiving a user input from the user; and
a processor (203) which is configured to capture a plurality of characteristics of at least one user input of the user by the user interface (201), to generate an input profile of the user on the basis of the captured plurality of characteristics, and to authenticate the user using the generated input profile,
wherein the processor (203) is configured to compare the generated input profile with a reference profile in order to authenticate the user,
wherein a characteristic of the plurality of characteristics is an input speed, a pressure value on an actuation device of the user interface (201), an input pattern, a gesture, a selection of an activation device of the user interface (201), a time of a user input or a time interval between two user inputs,
wherein the step of generating the input profile of the user comprises determining statistically significant characteristics from the plurality of characteristics and linking the determined statistically significant characteristics to the input profile,
wherein the step of comparing the generated input profile of the user with the reference profile comprises determining a degree of matching between the generated input profile of the user and the reference profile and comparing the determined degree of matching with a predetermined threshold value.

10. The data processing device (200) according to claim 9, wherein the data processing device (200) further comprises a communication interface, wherein the communication interface is configured to send out the generated input profile of the user via a communication network to a service server and to receive the result of a comparison of the generated input profile of the user with a reference profile from the service server in response to the sending out of the generated input profile of the user, and wherein the processor (203) is configured to authenticate the user depending on the received result of the comparison.

11. A computer program comprising a program code for executing the method (100) according to one of claims 1 to 8, when the program code is executed on a computer.

## Revendications

1. Procédé (100) pour authentifier un utilisateur d'un arrangement de traitement de données (200), l'arrangement de traitement de données (200) possédant une interface utilisateur (201) servant à la saisie d'une indication d'utilisateur par l'utilisateur, comprenant :
acquisition (101) d'une pluralité de caractéristiques d'au moins une saisie d'utilisateur de l'utilisateur au moyen de l'arrangement de traitement de données (200) ; création (103) d'un profil de saisie de l'utilisateur, sur la base de la pluralité de caractéristiques acquises, au moyen d'un processeur (203) de l'arrangement de traitement de données (200) ; et
comparaison (105) du profil de saisie créé de l'utilisateur avec un profil de référence afin d'authentifier l'utilisateur,
une caractéristique de la pluralité de caractéristiques étant une vitesse de saisie, une valeur de pression sur un dispositif d'actionnement de l'interface utilisateur (201), un modèle de saisie, un geste, une sélection d'un dispositif d'actionnement de l'interface utilisateur (201), un instant d'une saisie d'utilisateur ou un écart dans le temps entre deux saisies d'utilisateur,
l'étape de création (103) du profil de saisie de l'utilisateur comprenant une détermination de caractéristiques statistiquement significatives à partir de la pluralité de caractéristiques et une combinaison des caractéristiques statistiquement significatives déterminées avec le profil de saisie,
l'étape de comparaison (103) du profil de saisie créé de l'utilisateur avec le profil de référence comprenant une détermination d'une mesure de concordance entre le profil de saisie créé de l'utilisateur et le profil de référence et une comparaison de la mesure de concordance déterminée avec une valeur de seuil prédéterminée.

2. Procédé (100) selon la revendication 1, la détermination de la mesure de concordance entre le profil de saisie créé de l'utilisateur et le profil de référence étant effectuée au moyen d'une comparaison de modèles.

3. Procédé (100) selon l'une des revendications précédentes, le profil de référence comprenant une liste d'exclusions, et l'étape de comparaison (105) du profil de saisie créé de l'utilisateur avec le profil de référence comprenant une comparaison du profil de saisie créé avec la liste d'exclusions.

4. Procédé (100) selon l'une des revendications précédentes, le profil de saisie créé de l'utilisateur étant envoyé à un serveur de services par le biais d'un réseau de communication et la comparaison (105) du profil de saisie créé de l'utilisateur avec le profil de référence étant effectuée par le serveur de services.

5. Procédé (100) selon l'une des revendications précédentes, l'arrangement de traitement de données (200) possédant une interface de communication, à laquelle est associée une adresse de communication, et le profil de saisie de l'utilisateur étant créé sur la base de la pluralité acquise de caractéristiques et de l'adresse de communication de l'interface de communication.

6. Procédé (100) selon l'une des revendications précédentes, l'interface utilisateur (201) possédant un réglage d'utilisateur spécifique à l'utilisateur, et le profil de saisie de l'utilisateur étant créé sur la base de la pluralité acquise de caractéristiques et du réglage d'utilisateur spécifique à l'utilisateur.

7. Procédé (100) selon l'une des revendications précédentes, l'arrangement de traitement de données (200) possédant une interface de communication sans fil servant à la communication sans fil avec un jeton de sécurité, l'interface de communication sans fil étant configurée pour acquérir une intensité de signal d'un signal de communication émis par le jeton de sécurité, et le profil de saisie de l'utilisateur étant créé sur la base de la pluralité acquise de caractéristiques et de l'intensité de signal acquise.

8. Procédé (100) selon l'une des revendications précédentes, le procédé (100) comprenant en outre une acquisition d'un signe distinctif et une comparaison du signe distinctif acquis avec un signe distinctif de référence afin d'authentifier l'utilisateur.

9. Arrangement de traitement de données (200) destiné à authentifier un utilisateur, l'arrangement de traitement de données (200) possédant les caractéristiques suivantes :
une interface utilisateur (201) destinée à recevoir une saisie d'utilisateur par l'utilisateur ; et
un processeur (203), lequel est configuré pour acquérir une pluralité de caractéristiques d'au moins une saisie d'utilisateur de l'utilisateur au moyen de l'interface utilisateur (201), créer un profil de saisie de l'utilisateur sur la base de la pluralité de caractéristiques acquises, et authentifier l'utilisateur en utilisant le profil de saisie créé,
le processeur (203) étant configuré pour comparer le profil de saisie créé avec un profil de référence afin d'authentifier l'utilisateur,
une caractéristique de la pluralité de caractéristiques étant une vitesse de saisie, une valeur de pression sur un dispositif d'actionnement de l'interface utilisateur (201), un modèle de saisie, un geste, une sélection d'un dispositif d'actionnement de l'interface utilisateur (201), un instant d'une saisie d'utilisateur ou un écart dans le temps entre deux saisies d'utilisateur,
l'étape de création du profil de saisie de l'utilisateur comprenant une détermination de caractéristiques statistiquement significatives à partir de la pluralité de caractéristiques et une combinaison des caractéristiques statistiquement significatives déterminées avec le profil de saisie,
l'étape de comparaison du profil de saisie créé de l'utilisateur avec le profil de référence comprenant une détermination d'une mesure de concordance entre le profil de saisie créé de l'utilisateur et le profil de référence et une comparaison de la mesure de concordance déterminée avec une valeur de seuil prédéterminée.

10. Arrangement de traitement de données (200) selon la revendication 9, l'arrangement de traitement de données (200) possédant en outre une interface de communication, l'interface de communication étant configurée pour envoyer le profil de saisie créé de l'utilisateur à un serveur de services par le biais d'un réseau de communication et, en réaction à l'envoi du profil de saisie créé de l'utilisateur, recevoir de la part du serveur de services un résultat d'une comparaison du profil de saisie créé de l'utilisateur avec le profil de référence, et le processeur (203) étant configuré pour authentifier l'utilisateur en fonction du résultat reçu de la comparaison.

11. Programme informatique comprenant un code de programme pour mettre en œuvre le procédé (100) selon l'une des revendications 1 à 8 lorsque le code de programme est exécuté sur un ordinateur.
